# EUROPEAN PATENT APPLICATION

(11) **EP 0 816 144 A2**
(43) Date of publication of application: **07.01.1998**
(21) Application number: 97201624.0
(22) Date of filing: 30.05.1997
(51) Int. Cl.: B60H 1/00

(54) **Vehicle air conditioning module**

(30) Priority: 27.06.1996 GB 9613520
(71) Applicant: Delphi Automotive Systems Deutschland GmbH, D-42369 Wuppertal (DE)
(72) Inventor: Heck, Thomas, 55126 Mainz (DE); Seipel, Volker, 6140 Bensheim (DE)
(74) Representative: Denton, Michael John

(57) **Abstract**

A vehicle air conditioning module (10) comprising a blower (20) receiving ambient air from an air inlet (24); an evaporator core (12) receiving blown ambient air from the blower and delivering cooled air to an air outlet (30); a bypass passage (32,34) receiving ambient air from the blower and delivering ambient air to the air outlet to mix with the cooled air from the evaporator core; and a valve (36) positioned in the bypass passage and movable to adjust the flow of ambient air through the bypass passage. Provide temperature adjustment for the exiting air without the need for a heater core.

## Description

The present invention relates to a vehicle air conditioning module, and in particular to an air conditioning module for use in the rear of a motor vehicle.

It is known to provide air conditioning modules for the rear of a vehicle which have a heater core for heating air passing through the module, an evaporator core for cooling air passing through the module, a blower for moving air through the module, and a series of valves for directing portions of air through the heater core and/or the evaporator core dependent on the required temperature of the air leaving the module. It is not always easy or required to provide a heater core for air conditioning modules located in the rear of a vehicle.

It is an object of the present invention to overcome this disadvantage.

To this end, a vehicle air conditioning module comprises a blower receiving ambient air from an air inlet; an evaporator core receiving blown ambient air from the blower and delivering cooled air to an air outlet; a bypass passage receiving blown ambient air from the blower and delivering the ambient air to the air outlet to mix with the cooled air from the evaporator core; and a valve positioned in the bypass passage and movable to adjust the flow of ambient air through the bypass passage.

The present invention provides an air conditioning module for the rear of a vehicle which does not include a heater core. The provision of a bypass passage with a valve allows ambient air to be mixed with cooled air in any required proportions to raise the temperature of the cooled air leaving the evaporator core. The position of the valve relative to the bypass passage determines the required temperature of the air leaving the module.

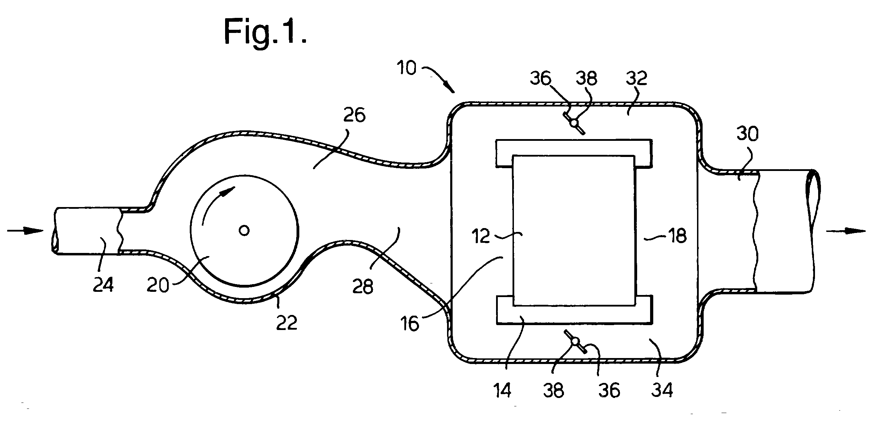

The present invention will now be described, by way of example, with reference to the accompanying drawing in which the sole Figure is a schematic representation of an embodiment of the present invention.

Referring to the drawing, the air conditioning module 10 for the rear of a vehicle includes an evaporator core 12 which is mounted within a housing 14 having an inlet 16 for receiving air, and an outlet 18 for the delivery of cooled air which has been cooled on its passage through the evaporator core. The air conditioning module 10 also includes a blower 20 which is mounted within a scroll housing 22. The blower 20 is rotatable to drive ambient air from an air inlet 24 to the module 10 to an outlet 26 from the scroll housing 22. The scroll housing outlet 26 is connected by a passage 28 to the housing inlet 16 to the evaporator core 12 to provide blown ambient air at the evaporator core inlet 16. The blown ambient air is cooled by the evaporator core 12 and passes out of the housing outlet 18 to an air outlet 30 from the module 10. The arrangement thus far described is known. The operation of the blower 20 and the evaporator core 12 can be any suitable known arrangement.

The air conditioning module 10 further includes a pair of bypass passages 32,34. Each bypass passage 32,34 extends around the evaporator core 12 from the passage 28 to the air outlet 30. Each bypass passage 32,34 receives blown ambient air from the blower 20 and directs the blown ambient air to mix with the cooled air leaving the evaporator core 12. Positioned within each bypass passage 32,34 is a flap valve 36 which is pivotable about an axis 38 between a first position in which the respective bypass passage is substantially blocked and a second position in which the respective bypass passage is substantially clear. The flap valve 36 can also be positioned at positions intermediate the first and second positions to provide adjustment of the flow of ambient air through the respective bypass passage 32,34. Each flap valve 36 may be manually operated or movable by an electric motor in any suitable arrangement. Alternative forms of valve may be used besides flap valves, for example, a rotary valve having a cylindrical body with apertures therethrough, the body being rotatable between a position in which the apertures are open to the bypass passage (for ambient air flow) and a position in which the apertures are closed and the bypass passage is substantially blocked by the body.

By moving the position of each flap valve 36 relative to its respective bypass passage 32,34, the amount of ambient air passing through the bypass passages may be adjusted to control the amount of ambient air mixing with the cooled air leaving the evaporator core, to thereby adjust the temperature of the cooled air from the evaporator core to any required temperature.

The present invention therefore provides temperature adjustment of the air leaving the module 10 without the presence of a heater core.

## Claims

1. A vehicle air conditioning module (10) comprising a blower (20) receiving ambient air from an air inlet (24); an evaporator core (12) receiving blown ambient air from the blower and delivering cooled air to an air outlet (30); a bypass passage (32,34) receiving blown ambient air from the blower and delivering the ambient air to the air outlet to mix with the cooled air from the evaporator core; and a valve (36) positioned between the ends of the bypass passage and movable to adjust the flow of ambient air through the bypass passage.

2. A vehicle air conditioning module as claimed in Claim 1, wherein the valve (36) is manually operable.

3. A vehicle air conditioning module as claimed in Claim 1 or Claim 2, wherein the valve is a flap valve (36) which can pivot.

4. A vehicle air conditioning module as claimed in any one of the receding Claims, comprising a pair of bypass passages (32,34) each of which has a movable valve (36) positioned therein between the ends thereof.
